# EUROPEAN PATENT SPECIFICATION

(11) **EP 1 964 734 B1**
(45) Date of publication and mention of the grant of the patent: **02.03.2011**
(21) Application number: 08001692.6
(22) Date of filing: 30.01.2008
(51) Int. Cl.: B60S 1/38, B60S 1/40

(54) **Windscreen wiper for motor vehicles**
Scheibenwischer für Kraftfahrzeuge
Essuie-glace de véhicules à moteur

(30) Priority: 27.02.2007 IT TO20070136
(43) Date of publication of application: 03.09.2008
(73) Proprietor: Creaco, Giovanni, 10091 Alpignano (TO) (IT); Valde, Giuseppe, 10147 Torino (IT)
(72) Inventor: Creaco, Giovanni, 10091 Alpignano (TO) (IT); Valde, Giuseppe, 10147 Torino (IT)
(74) Representative: Lotti, Giorgio

(56) References cited:
- EP-A- 1 050 441
- WO-A-00/21809
- DE-A1- 10 259 479
- US-A1- 2003 167 587

## Description

The present invention relates to a windscreen wiper for motor vehicles, in which the blade-holder is made with a metal lamina arched according to the curvature of the windscreen to which it is to be combined.

The windscreen wipers currently available on the market are usually made in three distinct parts. The first is constituted by the oscillating arm connected to an electric motor, the second by the blade-holder designed to enable the necessary elastic flexibility of the ensemble of the windscreen wiper, and the third is constituted by the wiper blade generally made of rubber and with a rigid metal core, which adheres to the windscreen as it is pushed by the blade-holder.

Normally, the blade-holder is made up of a set of arcs, generally three that are connected to one another in their central part according to a one-two arrangement. This arrangement is provided in an attempt to guarantee the same pressure over the entire extension of the wiper, irrespective of the curvature of the windscreen, so that the film of water thereon will be removed in a uniform way.

However, this complex structure, which to a certain extent projects from the windscreen, is impinged upon by the air when the vehicle is travelling and consequently tends to lift up or in any case to reduce the pressure with which it rests on the windscreen, so causing little uniformity in cleaning the glass, which thus presents areas in which the film of water is not removed.

DE 10259479 discloses a windscreen wiper for motor vehicles having a blade holder with a metallic lamina connected at least at one end to a connection element of said wiper.

W00021809 discloses a windscreen wiper having a lamina made of spring steel arched with a variable radius.

The purpose of the present invention is to provide a windscreen wiper that will not present the aforesaid drawbacks and that at the same time will present low production costs and will be simple to manufacture.

The above purpose is achieved according to the present invention by a windscreen wiper that has a. blade-holder with the characteristics specified in Claim 1.

Further characteristics and advantages will emerge clearly from the ensuing description, with reference to the attached plates of drawings of a preferred embodiment of the invention, which are provided by way of non-limiting example and in which:

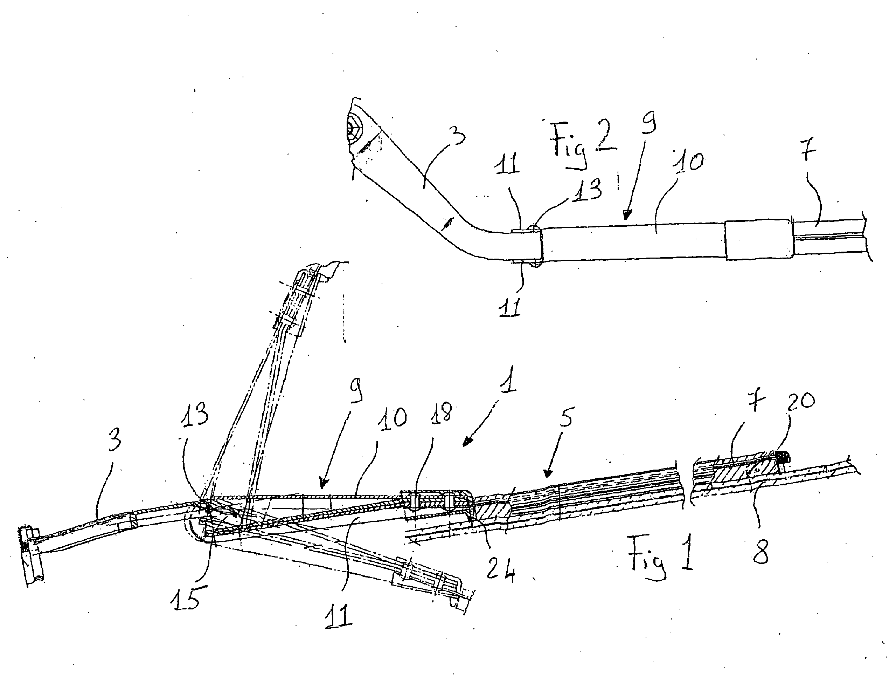

- Figure 1 is a partially cross-sectional side view of the windscreen wiper according to the invention, shown resting on the windscreen of the motor vehicle and in two operative positions, indicated by dashed lines;
- Figure 2 is a view from above of the windscreen wiper of Figure 1;
- Figure 3 is a partially cross-sectional side view, as in Figure 1, of the windscreen wiper of the invention shown resting on the windscreen of the motor vehicle and in two operative positions indicated by dashed lines, clearly visible in one of which is the arched shape of the blade-holder;
- Figure 4 is a partial, cross-sectional side view of a second embodiment of the elastic connection between the blade-holder and the oscillating arm of the windscreen wiper;
- Figure 5 is a cross-sectional view of the blade-holder according to the line III-III of Figure 3;
- Figure 6 is a partial side view of a blade-holder according to another preferred embodiment of the invention;
- Figures 7 and 8 are cross sections taken on the blade-holder of Figure 6;
- Figure 9 is a partial view from X of the end detent of the wiper element of Figure 6; and
- Figure 10 is a cross-sectional view according to the line VI-VI of the detent of the wiper element of Figure 6.

With reference to the figures, designated as a whole by 1 is a windscreen wiper for motor vehicles formed by an arm 3 fitted on the shaft of an electric motor (not illustrated) and by a blade-holder or stem 5. The blade-holder or stem is formed by a metal lamina 7 made of spring steel, which is arched with a variable radius of curvature according to the radius of curvature of the glass 8 of the windscreen of the model of vehicle on which it will be required to operate.

The metal lamina 7 is connected, with one of its ends, to the arm 3 of the windscreen wiper via an elastic element 9 for connection made up of a shell 10, which has a top wall and two sides 11, which are connected in rotation via a pin 13 to the arm 3 in a point corresponding to the start of the free end 15 of said arm, which is curved by some degrees downwards, i.e., in the direction of the windscreen 8. The two sides 11 enclose at least one elastic metal lamina 17, in the case illustrated two, which are made of spring steel and are joined in a single pack, via rivets 18, at the end of the metal lamina 7, whilst the other ends 19 are located under the curved free end 15, so as to pinch it between them and the terminal part of the top wall of the shell 9. In this way, an elastic connection is made with the arm 3, which tends to push the blade-holder against the glass 8 of the windscreen.

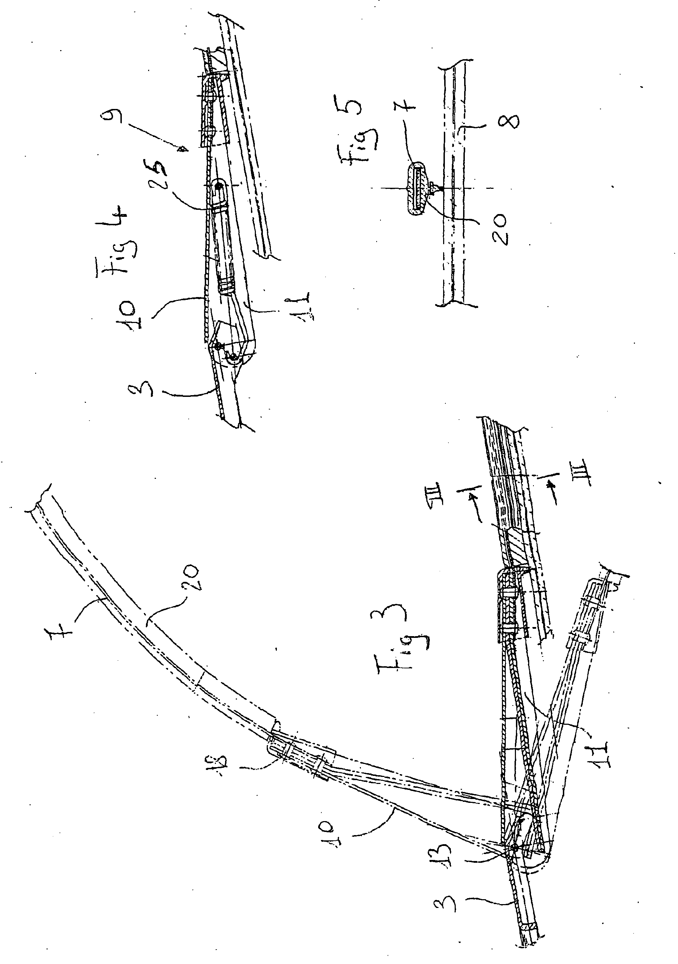

Fitted on the metal lamina 7, via a longitudinal cavity, is a wiper element 20 (Figure 5) normally made of rubber. The wiper element 20 is withheld on the metal lamina via a detent 21 by means of a tooth 22 inserted by snap action in a hole 23 made on the lamina at the free end not connected to the elastic element 9.

In a position corresponding to its connection to the blade-holder, the elastic element 9 bears a lug 24, which, in use, rests on the glass of the windscreen to prevent squeezing of the rubber part of said blade-holder.

The windscreen wiper thus provided is of very simple construction, constitutes a minimum impediment to the visibility of the driver and, given that it has a very small surface, its action is affected to a very reduced extent by the air that flows across the windscreen of the vehicle when the latter is moving.

Figure 4 illustrates a variant embodiment of the elastic connection between the oscillating arm 3 and the blade-holder 5, in which the bottom elastic laminas are replaced by a spring 25 that works in extension and is connected at the bottom to the arm 3 and to the blade-holder 5. Said spring performs the same functions of compression of the blade-holder 5 on the glass of the windscreen of the motor vehicle.

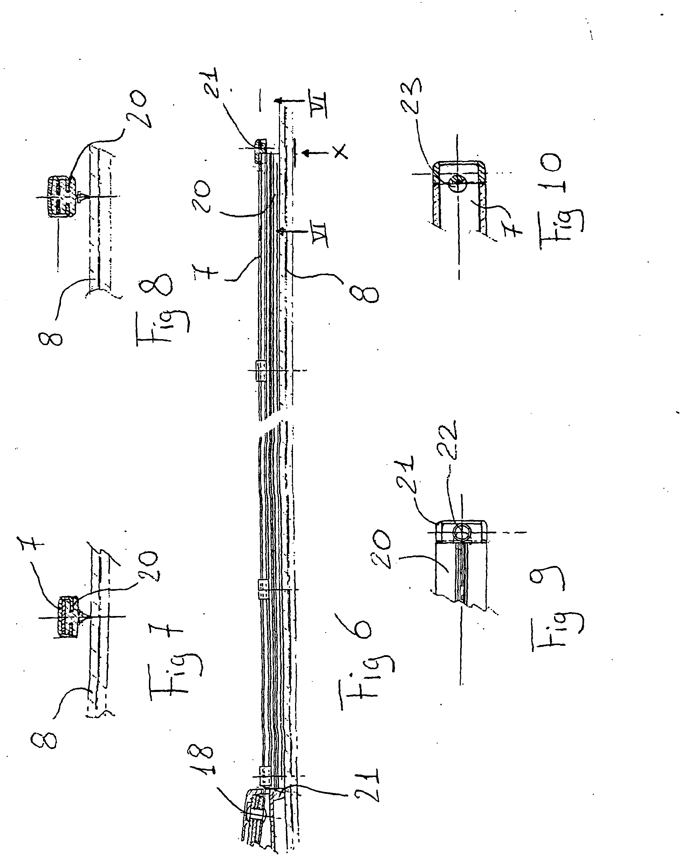

Figures 6 to 8 illustrate an alternative embodiment of the blade-holder 5, which has the rubber wiper element with a different profile having another type of engagement to the metal lamina 7.

It should be noted, however, that the invention is only limited by the scope of the claims annexed to the present patent application.

## Claims

1. A windscreen wiper for motor vehicles of the type made up of: an oscillating arm (3) fitted on the shaft of an electric motor; a connection element (9) between the arm and a blade-holder (5); and a wiper element (20) for cleaning the glass of the windscreen of a motor vehicle; the blade-holder (5) comprises a metal lamina (7), which is connected with one end to the connection element (9) and has the function of supporting the rubber wiper element (20); said metal lamina (7) is made of spring steel and is arched with a variable radius of curvature according to the radius of curvature of the glass (8) of the windscreen of the motor vehicle on which the windscreen wiper is mounted: the windscreen wiper is **characterized in that** the connection element (9) is formed by a shell (10) that has a top wall and two sides (11) , connected in rotation via a pin (13) to the free end of the arm (3).

2. The windscreen wiper for motor vehicles according to Claim 1, **characterized in that** the connection element between blade-holder (5) and arm (3) is an elastic element (9) designed to press the blade-holder (5) against the glass (8) of the windscreen.

3. The windscreen wiper according to Claims 1 and 2, **characterized in that** said two sides (11) enclose at least one elastic metal lamina (17) made of spring steel, joined in a pack to one end of said lamina (7) and of the top wall of the shell (9), via rivets (18).

4. The windscreen wiper according to the preceding claims, **characterized in that** the free end (15) of the oscillating arm is curved by some degrees downwards, i.e., in the direction of the windscreen (8),

5. The windscreen wiper according to the preceding claims, **characterized in that** the end of the top wall of the elastic element (9) not connected to the lamina (7) rests on the free end (15) of the oscillating arm (3), and the free end of the elastic metal lamina (17) not connected to the lamina (7) rests under the free end (15) of the oscillating arm (3) so as to pinch said end (15) between them.

6. The windscreen wiper according to Claims 1 and 2, **characterized in that** the connection element (9) contains a spring (25), which works in extension and is connected at the bottom to the arm (3) and to the blade-holder (5).

7. The windscreen wiper according to the preceding claims, **characterized in that** the connection element (9) bears a lug (24), which, in use, rests on the glass of the windscreen so as to prevent squeezing of the rubber part of said blade-holder (5).

## Patentansprüche

1. Ein Scheibenwischer für Kraftfahrzeuge der Art aufweisend: einen schwingenden Arm (3), montiert auf dem Schaft eines Elektromotors; ein Verbindungselement (9) zwischen dem Arm und einem Blatthalter (5); und ein Wischerelement (20) zum Säubern des Glases der Windschutzscheibe eines Kraftfahrzeugs; der Blatthalter (5) weist ein Metallblättchen (7) auf, welches mit einem Ende mit dem Verbindungselement (9) verbunden ist und die Funktion hat, das Gummiwischerelement (20) zu unterstützen; das Metallblättchen (7) ist aus Federstahl hergestellt und ist mit einem veränderlichen Krümmungsradius entsprechend dem Krümmungsradius des Glases (8) der Windschutzscheibe des Kraftfahrzeugs gewölbt, auf welcher der Scheibenwischer angebracht ist;
der Scheibenwischer ist **dadurch gekennzeichnet, dass**
das Verbindungselement (9) von einer Schale (10) gebildet wird, die eine obere Wand und zwei Seiten (11) aufweist, welche in Drehung über einen Stift (13) mit dem freien Ende des Armes (3) verbunden sind.

2. Der Scheibenwischer für Kraftfahrzeuge gemäß Anspruch 1, **dadurch gekennzeichnet, dass** das Verbindungselement zwischen Blatthalter (5) und Arm (3) ein elastisches Element (9) ist, welches gestaltet ist, den Blatthalter (5) gegen das Glas (8) der Windschutzscheibe zu drücken.

3. Der Scheibenwischer gemäß den Ansprüchen 1 und 2, **dadurch gekennzeichnet, dass** die zwei Seiten (11) zumindest ein elastisches Metallblättchen (17) umschließen, welches aus Federstahl hergestellt ist, mittels Niete (18) in ein Pack an ein Ende des Blättchens (7) und der oberen Wand der Schale (9) zusammengefasst.

4. Der Scheibenwischer nach den vorangehenden Ansprüchen, **dadurch gekennzeichnet, dass** das freie Ende (15) des schwingenden Arms um einige Grad nach unten gewölbt ist, d. h. in die Richtung der Windschutzscheibe (8).

5. Der Scheibenwischer nach den vorausgehenden Ansprüchen, **dadurch gekennzeichnet, dass** das Ende der oberen Wand des elastischen Elements (9), welches nicht mit dem Blättchen (7) verbunden ist, auf dem freien Ende (15) des schwingenden Arms (3) liegt und dass das freie Ende des elastischen Metallblättchens (17), welches nicht mit dem Blättchen (7) verbunden ist, unter dem freien Ende (15) des schwingenden Arms (3) liegt, um so das Ende (15) zwischen ihnen einzuklemmen.

6. Der Scheibenwischer nach Ansprüchen 1 und 2, **dadurch gekennzeichnet, dass** das Verbindungselement (9) eine Feder (25) aufweist, welche in Dehnung arbeitet und an einer Unterseite mit dem Arm (3) und dem Blatthalter (5) verbunden ist.

7. Der Scheibenwischer gemäß den vorausgehenden Ansprüchen, **dadurch gekennzeichnet, dass** das Verbindungselement (9) einen Vorsprung (24) trägt, welcher bei Gebrauch auf dem Glas der Windschutzscheibe liegt, um so das Quetschen des Gummiteils des Blatthalters (5) zu verhindern.

## Revendications

1. Essuie-glace pour des véhicules motorisés du type composé de : un bras oscillant (3) installé sur l'arbre d'un moteur électrique ; un élément de liaison (9) entre le bras et un porte-balai (5) ; et un élément d'essuie-glace (20) pour nettoyer la vitre du pare-brise d'un véhicule motorisé ; le porte-balai (5) comprend une lamelle métallique (7), qui est reliée avec une extrémité à l'élément de liaison (9) et remplit la fonction de supporter l'élément d'essuie-glace en caoutchouc (20) ; ladite lamelle métallique (7) est faite d'acier à ressort et est arquée avec un rayon variable de courbure selon le rayon de courbure de la vitre (8) du pare-brise du véhicule motorisé sur lequel l'essuie-glace est monté ; l'essuie-glace est **caractérisé en ce que** l'élément de liaison (9) est formé par une coque (10) qui comporte une paroi supérieure et deux côtés (11), reliés en rotation par l'intermédiaire d'une goupille (13) à l'extrémité libre du bras (3).

2. Essuie-glace pour véhicules motorisés selon la revendication 1, **caractérisé en ce que** l'élément de liaison entre le porte-balai (5) et le bras (3) est un élément élastique (9) conçu pour comprimer le porte-balai (5) contre la vitre (8) du pare-brise.

3. Essuie-glace selon les revendications 1 et 2, **caractérisé en ce que** lesdits deux côtés (11) enferment au moins une lamelle métallique élastique (17) faite d'acier à ressort, jointe de façon monobloc à une extrémité de ladite lamelle (7) et de la paroi supérieure de la coque (9), par l'intermédiaire de rivets (18).

4. Essuie-glace selon les revendications précédentes, **caractérisé en ce que** l'extrémité libre (15) du bras oscillant est incurvée de certains degrés vers le bas, à savoir dans la direction du pare-brise (8).

5. Essuie-glace selon les revendications précédentes, **caractérisé en ce que** l'extrémité de la paroi supérieure de l'élément élastique (9) non reliée à la lamelle (7) repose sur l'extrémité libre (15) du bras oscillant (3), et l'extrémité libre de la lamelle métallique élastique (17) non reliée à la lamelle (7) repose sous l'extrémité libre (15) du bras oscillant (3) afin de pincer ladite extrémité (15) entre elles.

6. Essuie-glace selon les revendications 1 et 2, **caractérisé en ce que** l'élément de liaison (9) contient un ressort (25), qui fonctionne en extension et est relié au niveau de la partie inférieure au bras (3) et au porte-balai (5).

7. Essuie-glace selon les revendications précédentes, **caractérisé en ce que** l'élément de liaison (9) supporte une oreille (24), qui, durant l'utilisation, repose sur la vitre du pare-brise afin d'empêcher le serrage de la partie de caoutchouc dudit porte-balai (5).
